# EUROPEAN PATENT SPECIFICATION

(11) **EP 3 744 559 B1**
(45) Date of publication and mention of the grant of the patent: **14.10.2026**
(21) Application number: 20757819.6
(22) Date of filing: 25.02.2020
(51) Int. Cl.: B60L 3/00, B60L 15/22, B60L 15/32, B60L 9/00, H02M 1/32, H02M 1/36

(54) **METHOD FOR CONTROLLING AUXILIARY POWER SUPPLY SYSTEM OF HIGH-SPEED MOTOR TRAIN UNIT, SYSTEM AND HIGH-SPEED MOTOR TRAIN UNIT**
VERFAHREN ZUR STEUERUNG DES HILFSSTROMVERSORGUNGSSYSTEMS EINER HOCHGESCHWINDIGKEITSTRIEBWAGENEINHEIT, SYSTEM UND HOCHGESCHWINDIGKEITSTRIEBWAGENEINHEIT
PROCÉDÉ DE COMMANDE D'UN SYSTÈME D'ALIMENTATION ÉLECTRIQUE AUXILIAIRE D'UNE UNITÉ DE TRAIN DE MOTEUR À GRANDE VITESSE, SYSTÈME ET UNITÉ DE TRAIN DE MOTEUR À GRANDE VITESSE

(30) Priority: 26.02.2019 CN 201910141801
(43) Date of publication of application: 02.12.2020
(73) Proprietor: CRRC Changchun Railway Vehicles Co., Ltd., Changchun, Jilin 130000 (CN)
(72) Inventor: REN, Xiangchen, Changchun, Jilin 130000 (CN); ZHENG, Hengliang, Changchun, Jilin 130000 (CN); LV, Long, Changchun, Jilin 130000 (CN); MA, Xiaoming, Changchun, Jilin 130000 (CN); WANG, Zhongyao, Changchun, Jilin 130000 (CN)
(74) Representative: Lorenz Seidler Gossel Part. mbB
(86) International application number: PCT/CN2020/076618
(87) International publication number: WO 2020/173433

(56) References cited:
- CN-A- 105 501 065
- CN-A- 106 787 663
- CN-A- 106 787 663
- CN-A- 107 187 318
- CN-A- 108 001 466
- CN-A- 109 217 376
- CN-A- 109 774 494
- CN-A- 109 774 494
- CN-U- 202 080 152
- US-A1- 2016 167 528

## Description

The present application claims priority to Chinese Patent Application No. 201910141801.2, titled "METHOD AND SYSTEM FOR CONTROLLING AUXILIARY POWER SUPPLY SYSTEM IN HIGH-SPEED MULTIPLE UNITS, AND HIGH-SPEED MULTIPLE UNITS", filed on February 26, 2019 with the China National Intellectual Property Administration.

### FIELD

The present disclosure relates to the technical field of rail transit, and in particular to a method and a system for controlling an auxiliary power supply system in a high-speed multiple units, and a high-speed multiple units.

### BACKGROUND

A high-speed multiple units is a multiple units train with a designed speed greater than 200km/h, an operating speed of the high-speed multiple units may be commonly greater than 250km/h. The high-speed multiple units is classified as a higher level of high-speed trains. The transportation requirement for long distance, high passenger volume, high density and short traveling time may be satisfied by the high-speed multiple units.

For the cost, lightweight and simplified system control of multiple units train, a technical solution, in which traction and auxiliary are integrated, is widely used in the high-speed multiple units. That is, an auxiliary power supply system in the high-speed multiple units commonly includes multiple auxiliary converters. The auxiliary converters are connected to a grid to output an alternating current medium voltage electricity to medium voltage alternating current buses. The alternating current buses in the whole train are connected in series, via electrical wires between on-board power boxes (or external power boxes), to form a whole train alternating current bus. For improving the usability of the train during fault condition, multiple circuit breakers are arranged in the whole train alternating current bus to divide the alternating current bus into multiple sections.

When controlling the auxiliary converters of the auxiliary power supply system, in order to avoid an interphase short circuit fault caused by simultaneous starting of the auxiliary converters corresponding to a same alternating current bus, the auxiliary converters are controlled to be started sequentially, that is, the multiple auxiliary converters of the whole train are started one by one in a certain sequence. In this way, the interphase short circuit fault may be effectively avoided when the auxiliary system is started, however a more overall startup time of the auxiliary system may be caused, which results in a negative effect to a startup time of electricity loads in the train, therefore a startup time of the train is extended.

CN202080152(U) discloses an auxiliary power supply device for vehicles, which is widely used in auxiliary power supply systems of urban rail transit vehicles and similar auxiliary power supply systems of other vehicles. The auxiliary power supply device comprises auxiliary power supplies, auxiliary inverter power boxes, power supply bus bars and at least one isolated three-phase AC contactor installed on the power supply bus bars, wherein the auxiliary inverter power boxes are installed in at least two compartments, the auxiliary inverter power box in each compartment comprises two auxiliary power supplies which form synchronization with the power supply bus bars to supply power to the train load, and the isolated three-phase AC contactor is in a close state during the normal operation of the device. Through the use of the auxiliary power supply device described by the utility model, the impact of the fault of a single auxiliary inverter power supply on the auxiliary power supply of an entire train in centralized power supply is avoided, the technical shortcomings of high failure rate and increased train weight in distributed power supply are overcome, and the performances of an auxiliary power supply system and the entire vehicle are optimized.

CN106787663A discloses a parallel starting method for auxiliary converters of a motor train unit, wherein after receiving an AC output enable command, other auxiliary converters synchronize their output with the same phase as a first auxiliary converter.

### SUMMARY

In order to solve the above technical problem, a method and system for controlling an auxiliary power supply system of a high-speed multiple units and a high-speed multiple units are provided according to the present disclosure, to avoid an interphase short circuit fault that may be caused by simultaneous starting of auxiliary converters and shorten an overall startup time of an auxiliary power supply system.

To achieve the above objectives, the following technical solutions are provided according to the embodiments of the present disclosure.

A method for controlling an auxiliary power supply system is provided. The method is used for an auxiliary power supply system of a high-speed multiple units. The high-speed multiple units includes at least one multiple unit. Each multiple unit includes eight carriages. The auxiliary power supply system includes multiple auxiliary converters arranged in different carriages of each multiple unit and multiple circuit breakers configured to connect the multiple auxiliary converters. The method for controlling the auxiliary power supply system includes: acquiring an on/off state of each of the circuit breakers; dividing the auxiliary converters in the multiple unit into multiple section groups according to the on/off state of each of the circuit breakers; controlling one of the auxiliary converters in each section group to be started; and starting simultaneously remaining auxiliary converters other than the one started auxiliary converter in each section group according to a phase of a voltage outputted by the one started auxiliary converter in the section group.

The starting simultaneously remaining auxiliary converters other than the one started auxiliary converter in each section group according to a phase of a voltage outputted by the one started auxiliary converter in the section group includes: after a ready signal is sent by each of the remaining auxiliary converters in each section group, controlling each of the remaining auxiliary converters to output a voltage having same three phases as the voltage outputted by the one started auxiliary converter in the section group.

Optionally, the eight carriages of each multiple unit are numbered from 1 to 8 in order. The auxiliary power supply system includes four auxiliary converters and three circuit breakers. The four auxiliary converters are respectively arranged in carriages 2, 4, 5 and 7 of each multiple unit. The three circuit breakers are configured to connect the four auxiliary converters and are respectively arranged in carriages 3, 5 and 6 of each multiple unit. The dividing the auxiliary converters in the multiple unit into multiple section groups according to the on/off state of each of the circuit breakers includes:
grouping the auxiliary converter in the carriage 2 into one section group, and grouping the auxiliary converters in remaining carriages other than the carriage 2 into another section group, if only the circuit breaker in the carriage 3 is turned off;
grouping the auxiliary converters in the carriages 2 and 4 into one section group, and grouping the auxiliary converters in remaining carriages other than the carriages 2 and 4 into another section group, if only the circuit breaker in the carriage 5 is turned off;
grouping the auxiliary converter in the carriage 7 into one section group, and grouping the auxiliary converters in remaining carriages other than the carriage 7 into another section group, if only the circuit breaker in the carriage 6 is turned off;
grouping the auxiliary converter in the carriage 2 into a first section group, grouping the auxiliary converter in the carriage 4 into a second section group, and grouping the auxiliary converters in the carriages 5 and 7 into a third section group, if only the circuit breakers in the carriages 3 and 5 are turned off;
grouping the auxiliary converter in the carriage 2 into a first section group, grouping the auxiliary converter in the carriage 7 into a second section group, and grouping the auxiliary converters in the carriages 4 and 5 into a third section group, if only the circuit breakers in the carriages 3 and 6 are turned off;
grouping the auxiliary converter in the carriage 5 into a first section group, grouping the auxiliary converter in the carriage 7 into a second section group, and grouping the auxiliary converters in the carriages 2 and 4 into a third section group, if only the circuit breakers in the carriages 5 and 6 are turned off; and
grouping each of all the auxiliary converters into an independent section group, if all of the circuit breakers in the carriage 3, 5 and 6 are turned off.

Optionally, the controlling one of the auxiliary converters in each section group to be started includes: if a ready signal sent by only one of the auxiliary converters in the section group is received, sending a startup permission signal to the auxiliary converter that sends the ready signal, where the auxiliary converter that sends the ready signal is started after receiving the startup permission signal; and if ready signals sent by two or more of the auxiliary converters in the section group are received, sending a startup permission signal to an auxiliary converter having a smallest number among the auxiliary converters that send the ready signals, where the auxiliary converter having a smallest number is started after receiving the startup permission signal.

A system for controlling an auxiliary power supply system is provided. The system for controlling an auxiliary power supply system is used for an auxiliary power supply system of a high-speed multiple units. The high-speed multiple units includes at least one multiple unit. Each multiple unit includes eight carriages. The auxiliary power supply system includes multiple auxiliary converters arranged in different carriages of each multiple unit and multiple circuit breakers configured to connect the multiple auxiliary converters. The method for controlling the auxiliary power supply system includes: a state acquisition module configured to acquire an on/off state of each of the circuit breakers; a section division module configured to divide the auxiliary converters in the multiple unit into multiple section groups according to the on/off state of each of the circuit breakers; a first startup module configured to control one of the auxiliary converters in each section group to be started; and a second startup module configured to start simultaneously remaining auxiliary converters other than the one started auxiliary converter in each section group according to a phase of a voltage outputted by the one started auxiliary converter in the section group.

The second startup module is configured to: after a ready signal is sent by each of the remaining auxiliary converters in each section group, control each of the remaining auxiliary converters to output a voltage having same three phases as the voltage outputted by the one started auxiliary converter in the section group.

Optionally, the eight carriages of each multiple unit are numbered from 1 to 8 in order. The auxiliary power supply system includes four auxiliary converters and three circuit breakers. The four auxiliary converters are respectively arranged in carriages 2, 4, 5 and 7 of each multiple unit. The three circuit breakers are configured to connect the four auxiliary converters and are respectively arranged in carriages 3, 5 and 6 of each multiple unit. The section division module is configured to:
group the auxiliary converter in the carriage 2 into one section group, and group the auxiliary converters in remaining carriages other than the carriage 2 into another section group, if only the circuit breaker in the carriage 3 is turned off;
group the auxiliary converters in the carriages 2 and 4 into one section group, and group the auxiliary converters in remaining carriages other than the carriages 2 and 4 into another section group, if only the circuit breaker in the carriage 5 is turned off;
group the auxiliary converter in the carriage 7 into one section group, and group the auxiliary converters in remaining carriages other than the carriage 7 into another section group, if only the circuit breaker in the carriage 6 is turned off;
group the auxiliary converter in the carriage 2 into a first section group, group the auxiliary converter in the carriage 4 into a second section group, and group the auxiliary converters in the carriages 5 and 7 into a third section group, if only the circuit breakers in the carriages 3 and 5 are turned off;
group the auxiliary converter in the carriage 2 into a first section group, group the auxiliary converter in the carriage 7 into a second section group, and group the auxiliary converters in the carriages 4 and 5 into a third section group, if only the circuit breakers in the carriages 3 and 6 are turned off;
group the auxiliary converter in the carriage 5 into a first section group, group the auxiliary converter in the carriage 7 into a second section group, and group the auxiliary converters in the carriages 2 and 4 into a third section group, if only the circuit breakers in the carriages 5 and 6 are turned off; and
group each of all the auxiliary converters into an independent section group, if all of the circuit breakers in the carriage 3, 5 and 6 are turned off.

Optionally, the first startup module is configured to: if a ready signal sent by only one of the auxiliary converters in the section group is received, send a startup permission signal to the auxiliary converter that sends the ready signal, where the auxiliary converter that sends the ready signal is started after receiving the startup permission signal; and if ready signals sent by two or more of the auxiliary converters in the section group are received, send a startup permission signal to an auxiliary converter having a smallest number among the auxiliary converters that send the ready signals, where the auxiliary converter having a smallest number is started after receiving the startup permission signal.

A high-speed multiple units is provided. The high-speed multiple units includes at least one multiple unit. Each multiple unit includes eight carriages. An auxiliary power supply system includes multiple auxiliary converters arranged in different carriages of each multiple unit and multiple circuit breakers configured to connect the multiple auxiliary converters. The high-speed multiple units further includes a system for controlling an auxiliary power supply system described above.

It can be seen from the foregoing technology solutions that, a method and system for controlling an auxiliary power supply system of a high-speed multiple units and a high-speed multiple units are provided according to the embodiments of present disclosure. According to the method for controlling an auxiliary power supply system, firstly, an on/off state of each of the circuit breakers in each multiple unit of the high-speed multiple units is acquired; secondly, the auxiliary converters in the multiple unit are divided into multiple section groups according to the on/off state of each of the circuit breakers; finally, the auxiliary converters in each section group are started. In a process of starting the auxiliary converters in each section group, firstly, one of the auxiliary converters in each section group is controlled to be started; and secondly, remaining auxiliary converters other than the one started auxiliary converter in each section group are started simultaneously. In this way, an interphase short circuit fault that may be caused by simultaneous starting of auxiliary converters is avoided and an overall startup time of an auxiliary power supply system is shortened.

### BRIEF DESCRIPTION OF THE DRAWINGS

In order to illustrate technical solutions in embodiments of the present disclosure or the conventional technology more clearly, drawings to be used in the description of the embodiments or the conventional technology are briefly described below. Apparently, the drawings described below only illustrate some embodiments of the present disclosure, and other drawings may be obtained by those skilled in the art according to the provided drawings without any creative work.
Figure 1 is a schematic flowchart of a method for controlling an auxiliary power supply system according to an embodiment of the present disclosure;
Figure 2 is a schematic diagram of one multiple unit according to an embodiment of the present disclosure; and
Figure 3 is a schematic flowchart of a method for controlling an auxiliary power supply system according to another embodiment of the present disclosure.

### DETAILED DESCRIPTION

As mentioned in the background, in the method for controlling auxiliary converters of an auxiliary power supply system according to the conventional technology, in order to avoid an interphase short circuit fault caused by simultaneous starting of the auxiliary converters corresponding to a same alternating current bus, the auxiliary converters are controlled to be started sequentially, that is, the multiple auxiliary converters of the whole train are started one by one in a certain sequence. In this way, the interphase short circuit fault may be effectively avoided when the auxiliary system is started, however a more overall startup time of the auxiliary system may be caused, which results in a negative effect to a startup time of electricity loads in the train, therefore a startup time of the train is extended.

In view of this, a method for controlling an auxiliary power supply system is provided according to embodiments of the disclosure. The method is used for an auxiliary power supply system of a high-speed multiple units. The high-speed multiple units includes at least one multiple unit. Each multiple unit includes eight carriages. The auxiliary power supply system includes multiple auxiliary converters arranged in different carriages of each multiple unit and multiple circuit breakers configured to connect the multiple auxiliary converters. The method for controlling the auxiliary power supply system includes: acquiring an on/off state of each of the circuit breakers; dividing the auxiliary converters in the multiple unit into multiple section groups according to the on/off state of each of the circuit breakers; controlling one of the auxiliary converters in each section group to be started; and starting simultaneously remaining auxiliary converters other than the one started auxiliary converter in each section group according to a phase of a voltage outputted by the one started auxiliary converter in the section group.

A system for controlling an auxiliary power supply system is provided. The system for controlling an auxiliary power supply system is used for an auxiliary power supply system of a high-speed multiple units. The high-speed multiple units includes at least one multiple unit. Each multiple unit includes eight carriages. The auxiliary power supply system includes multiple auxiliary converters arranged in different carriages of each multiple unit and multiple circuit breakers configured to connect the multiple auxiliary converters. The method for controlling the auxiliary power supply system includes: a state acquisition module configured to acquire an on/off state of each of the circuit breakers; a section division module configured to divide the auxiliary converters in the multiple unit into multiple section groups according to the on/off state of each of the circuit breakers; a first startup module configured to control one of the auxiliary converters in each section group to be started; and a second startup module configured to start simultaneously remaining auxiliary converters other than the one started auxiliary converter in each section group according to a phase of a voltage outputted by the one started auxiliary converter in the section group.

According to the method for controlling an auxiliary power supply system, firstly, an on/off state of each of the circuit breakers in each multiple unit of the high-speed multiple units is acquired; secondly, the auxiliary converters in the multiple unit are divided into multiple section groups according to the on/off state of each of the circuit breakers; finally, the auxiliary converters in each section group are started. In a process of starting the auxiliary converters in each section group, firstly, one of the auxiliary converters in each section group is controlled to be started; and secondly, remaining auxiliary converters other than the one started auxiliary converter in each section group are started simultaneously. In this way, an interphase short circuit fault that may be caused by simultaneous starting of auxiliary converters is avoided and an overall startup time of an auxiliary power supply system is shortened.

Technical solutions in embodiments of the present disclosure are described clearly and completely hereinafter in conjunction with the drawings of the embodiments of the present disclosure. Apparently, the embodiments described herein are only a few rather than all of the embodiments of the disclosure.

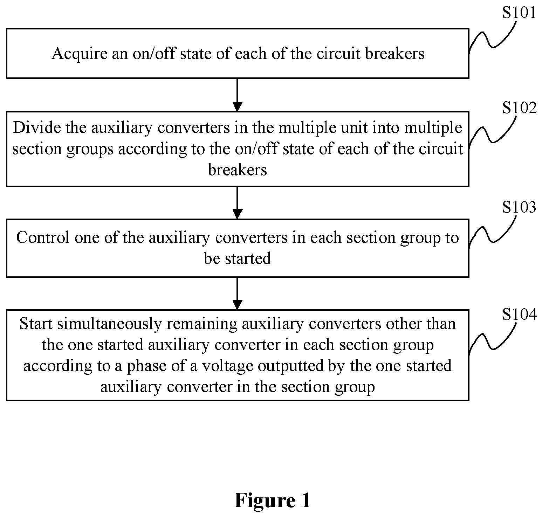

Referring to Figure 1, a method for controlling an auxiliary power supply system is provided according to an embodiment of the disclosure. The method is used for an auxiliary power supply system of a high-speed multiple units. The high-speed multiple units includes at least one multiple unit. Each multiple unit includes eight carriages. The auxiliary power supply system includes multiple auxiliary converters arranged in different carriages of each multiple unit and multiple circuit breakers configured to connect the multiple auxiliary converters. The method for controlling the auxiliary power supply system includes following steps S101 to S104.

In step S101, an on/off state of each of the circuit breakers is acquired.

In step S102, the auxiliary converters in the multiple unit are divided into multiple section groups according to the on/off state of each of the circuit breakers.

In step S103, one of the auxiliary converters in each section group is controlled to be started.

In step S104, remaining auxiliary converters other than the one started auxiliary converter in each section group are started simultaneously according to a phase of a voltage outputted by the one started auxiliary converter in the section group.

According to the method for controlling an auxiliary power supply system, firstly, an on/off state of each of the circuit breakers in each multiple unit of the high-speed multiple units is acquired; secondly, the auxiliary converters in the multiple unit are divided into multiple section groups according to the on/off state of each of the circuit breakers; finally, the auxiliary converters in each section group are started. In a process of starting the auxiliary converters in each section group, firstly, one of the auxiliary converters in each section group is controlled to be started; and secondly, remaining auxiliary converters other than the one started auxiliary converter in each section group are started simultaneously. In this way, an interphase short circuit fault that may be caused by simultaneous starting of auxiliary converters is avoided and an overall startup time of an auxiliary power supply system is shortened.

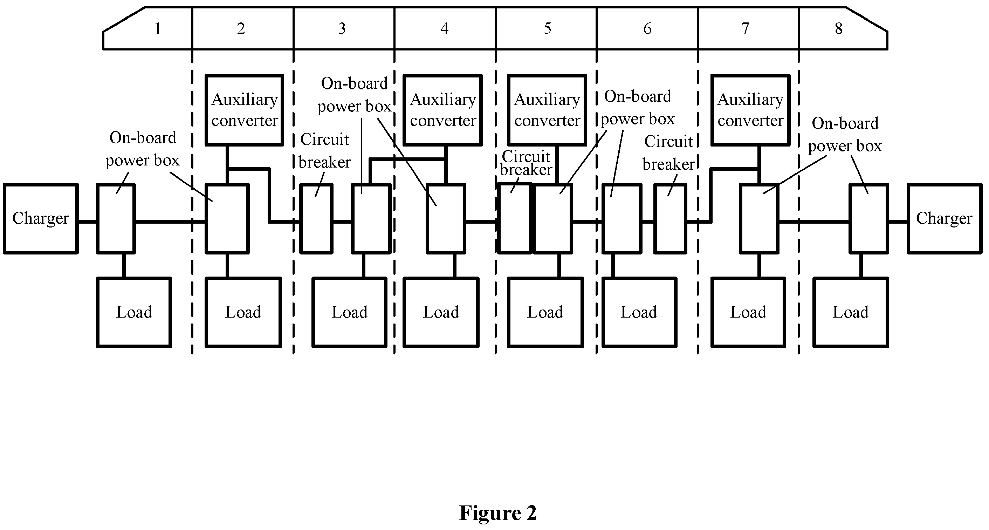

Referring to Figure 2, each multiple unit normally includes eight carriages, the eight carriages of each multiple unit are numbered from 1 to 8 in order. The auxiliary power supply system includes four auxiliary converters and three circuit breakers. The four auxiliary converters are respectively arranged in carriages 2, 4, 5 and 7 of each multiple unit. The three circuit breakers are configured to connect the four auxiliary converters and are respectively arranged in carriages 3, 5 and 6 of each multiple unit. In addition, an on-board power box and a load in each carriage, and a charger in each of carriages 1 and 8 are illustrated in Figure 2.

Referring to Figure 2, a head of each of carriages 1 and 8 is end 1, and the other end of each of the carriages 1 and 8 is end 2. An end of a remaining carriage other the carriages 1 and 8 closest to the head (the end 1 of each of the carriage 1 or 8) is end 1, and the other end of the remaining carriage is end 2.

In a distribution of auxiliary converters and circuit breakers shown in Figure 2, a whole alternating current bus is divided into four bus sections. Carriages 7 and 8 correspond to one bus section. Carriages 3 and 4 correspond to another bus section. Carriages 5 and 6 correspond to another bus section. Carriages 1 and 2 correspond to another bus section. When all circuit breakers are turned on, the four bus sections are connected in series to form one alternating current bus.

In case of fault condition, the turn-on or turn-off of a circuit breaker is controlled by Train Control and Management System (TCMS), to more accurately locate a fault location. That is, a range in which a fault occurs may be accurately located in two carriages, and each fault point only affects a normal operation of one auxiliary converter. If only one auxiliary converter is powered down, a main control function of the whole train is not affected, If two or more short-circuit faults occur in a front half and a rear half of the train, for example, the short-circuit fault occurs in carriages 2 and 7, TCMS turns off the circuit breakers in carriages 3 and 6, and a bus of the whole train is divided into following three sections. Carriages 1 and 2 correspond to one section (the auxiliary converter in carriage 2 stops operating), carriages 3, 4, 5 and 6 correspond to another section (the auxiliary converters in carriages 4 and 5 normally supply electricity), and carriages 7 and 8 correspond to another section (the auxiliary converter in carriage 7 stops operating). In this condition, the main function of the train may still be ensured without waiting for rescue, which reduces the serious impact of a single point fault on the whole train in conventional control method.

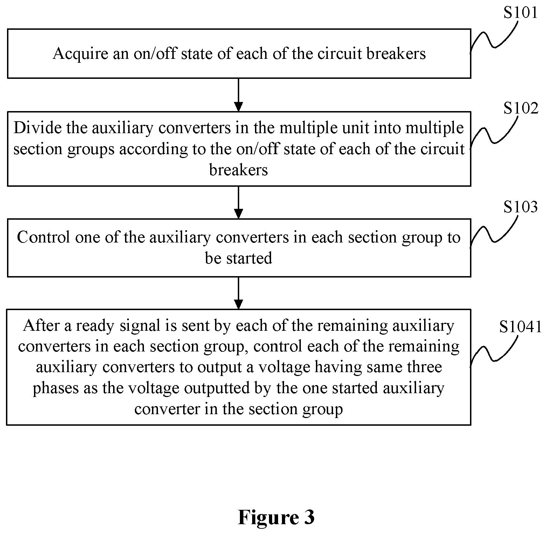

Based on the above embodiment, in an embodiment of the present disclosure, as shown in Figure 3, the starting simultaneously remaining auxiliary converters other than the one started auxiliary converter in each section group according to a phase of a voltage outputted by the one started auxiliary converter in the section group include step S1041.

In step S1041, after a ready signal is sent by each of the remaining auxiliary converters in each section group, each of the remaining auxiliary converters is controlled to output a voltage having same three phases as the voltage outputted by the one started auxiliary converter in the section group.

In the embodiment, in a case that one auxiliary converter has been started in one section group, when other auxiliary converters in the section group are to be started, it should be ensured that three phases (that is, U-phase, V-phase and W-phase) of a voltage outputted by each of other auxiliary converters in the section group is the same as three phases of the voltage outputted by the one started auxiliary converter, to realize successful startup and grid-connection of the auxiliary converters.

Based on the above embodiment, in an embodiment of the present disclosure, as shown in Figure 2, the eight carriages of each multiple unit are numbered from 1 to 8 in order. The auxiliary power supply system includes four auxiliary converters and three circuit breakers. The four auxiliary converters are respectively arranged in carriages 2, 4, 5 and 7 of each multiple unit. The three circuit breakers are configured to connect the four auxiliary converters and are respectively arranged in carriages 3, 5 and 6 of each multiple unit.

The dividing the auxiliary converters in the multiple unit into multiple section groups according to the on/off state of each of the circuit breakers includes following steps S1031 to S1037.

In step S1031, the auxiliary converter in the carriage 2 is grouped into one section group, and the auxiliary converters in remaining carriages other than the carriage 2 are grouped into another section group, if only the circuit breaker in the carriage 3 is turned off.

In step S1032, the auxiliary converters in the carriages 2 and 4 are grouped into one section group, and the auxiliary converters in remaining carriages other than the carriages 2 and 4 are grouped into another section group, if only the circuit breaker in the carriage 5 is turned off.

In step S1033, the auxiliary converter in the carriage 7 is grouped into one section group, and the auxiliary converters in remaining carriages other than the carriage 7 are grouped into another section group, if only the circuit breaker in the carriage 6 is turned off.

In step S1034, the auxiliary converter in the carriage 2 is grouped into a first section group, the auxiliary converter in the carriage 4 is grouped into a second section group, and the auxiliary converters in the carriages 5 and 7 are grouped into a third section group, if only the circuit breakers in the carriages 3 and 5 are turned off.

In step S1035, the auxiliary converter in the carriage 2 is grouped into a first section group, the auxiliary converter in the carriage 7 is grouped into a second section group, and the auxiliary converters in the carriages 4 and 5 are grouped into a third section group, if only the circuit breakers in the carriages 3 and 6 are turned off.

In step S1036, the auxiliary converter in the carriage 5 is grouped into a first section group, the auxiliary converter in the carriage 7 is grouped into a second section group, and the auxiliary converters in the carriages 2 and 4 are grouped into a third section group, if only the circuit breakers in the carriages 5 and 6 are turned off.

In step S1037, each of all the auxiliary converters is grouped into an independent section group, if all of the circuit breakers in the carriage 3, 5 and 6 are turned off.

Reference is made to Table 1, which illustrates a startup process and startup time of the auxiliary converters in different section group division conditions, so that a startup situation of the auxiliary converters in different section group division conditions according to the embodiments of the present disclosure will become clearer.

**Table 1 theoretical calculation value of startup time of auxiliary converters in different operation conditions**

| operation condition | the state of the circuit breakers | control startup of auxiliary converters | startup time | theoretical calculation value of the shortened time | startup time of the convention method |
|---|---|---|---|---|---|
| | only the circuit breaker in carriage 3 is turned off | (1) the auxiliary converter in carriage 2 is in an independent bus section and may be controlled independently; (2) the auxiliary converters in carriages 4, 5 and 7 are in one bus section, one auxiliary converter is firstly started, and then the other two auxiliary converters are started and connected to grid synchronously; | (1) the startup time of the auxiliary converter in carriage 2 is at least 5s; (2) the startup time of the auxiliary converters in carriages 4, 5 and 7 is 10s; | 50% | 20s |
| | only the circuit breaker in carriage 5 is turned off | (1) the auxiliary converters in carriages 2 and 4 are in one bus section, one auxiliary converter is firstly started to establish a bus voltage for this bus section, and then the other auxiliary converter is started; (2) the auxiliary converters in carriages 5 and 7 are in one bus section, one auxiliary converter is firstly started to establish a bus voltage for this bus section, and then the other auxiliary converter is started; | (1) the startup time of the auxiliary converters in carriages 2 and 4 is at least 10s; (2) the startup time of the auxiliary converters in carriages 5 and 7 is at least 10s; | 50% | 20s |
| | only the circuit breaker in carriage 6 is turned off | (1) the auxiliary converter in carriage 7 is in an independent bus section and may be controlled independently; (2) the auxiliary converters in carriages 2, 4 and 5 are in one bus section, one auxiliary converter is firstly started, and then the other two auxiliary converters are started and connected to grid synchronously; | (1) the startup time of the auxiliary converter in carriage 7 is at least 5s; (2) the startup time of the auxiliary converters in carriages 2, 4 and 5 is 10s; | 50% | 20s |
| | only the circuit breakers in carriages 3 and 5 are turned off | (1) the auxiliary converter in carriage 2 is in an independent bus section and may be controlled independently; (2) the auxiliary converter in carriage 4 is in an independent bus section and may be controlled independently; (3) the auxiliary converters in carriages 5 and 7 are in one bus section, one auxiliary converter is firstly started to establish a bus voltage for this bus section, and then the other auxiliary converter is started; | (1) the startup time of the auxiliary converter in carriage 2 is at least 5s; (2) the startup time of the auxiliary converter in carriage 4 is at least 5s; (3) the startup time of the auxiliary converters in carriages 5 and 7 is at least 10s; | 50% | 20s |
| | only the circuit breakers in carriages 3 and 6 are turned off | (1) the auxiliary converter in carriage 2 is in an independent bus section and may be controlled independently; (2) the auxiliary converter in carriage 7 is in an independent bus section and may be controlled independently; (3) the auxiliary converters in carriages 4 and 5 are in one bus section, one auxiliary converter is firstly started to establish a bus voltage for this bus section, and then the other auxiliary converter is started; | (1) the startup time of the auxiliary converter in carriage 2 is at least 5s; (2) the startup time of the auxiliary converter in carriage 7 is at least 5s; (3) the startup time of the auxiliary converters in carriages 4 and 5 is at least 10s; | 50% | 20s |
| | only the circuit breakers in carriages 5 and 6 are turned off | (1) the auxiliary converter in carriage 5 is in an independent bus section and may be controlled independently; (2) the auxiliary converter in carriage 7 is in an independent bus section and may be controlled independently; (3) the auxiliary converters in carriages 2 and 4 are in one bus section, one auxiliary converter is firstly started to establish a bus voltage for this bus section, and then the other auxiliary converter is started; | (1) the startup time of the auxiliary converter in carriage 5 is at least 5s; (2) the startup time of the auxiliary converter in carriage 7 is at least 5s; (3) the startup time of the auxiliary converters in carriages 2 and 4 is at least 10s; | 50% | 20s |
| | all the circuit breakers in carriages 3, 5 and 6 are turned off | each of the auxiliary converters is in an independent bus section and may be controlled independently; | The startup time of all auxiliary converters is at least 5s. | 75% | 20s |

Based on the above embodiment, in an embodiment of the present disclosure, the controlling one of the auxiliary converters in each section group to be started includes steps S1031 and S1032.

In step S1031, if a ready signal sent by only one of the auxiliary converters in the section group is received, a startup permission signal is sent to the auxiliary converter that sends the ready signal. The auxiliary converter that sends the ready signal is started after receiving the startup permission signal.

In step S1032, if ready signals sent by two or more of the auxiliary converters in the section group are received, a startup permission signal is sent to an auxiliary converter having a smallest number among the auxiliary converters that send the ready signals. The auxiliary converter having a smallest number is started after receiving the startup permission signal.

The system for controlling an auxiliary power supply system according to the embodiment of the present disclosure will be described as follows, the system for controlling the auxiliary power supply system and the method for controlling the auxiliary power supply system described above may be referred to each other.

A system for controlling an auxiliary power supply system is provided according to the disclosure. The system for controlling an auxiliary power supply system is used for an auxiliary power supply system of a high-speed multiple units. The high-speed multiple units includes at least one multiple unit. Each multiple unit includes eight carriages. The auxiliary power supply system includes multiple auxiliary converters arranged in different carriages of each multiple unit and multiple circuit breakers configured to connect the multiple auxiliary converters. The method for controlling the auxiliary power supply system includes a state acquisition module, a section division module, a first startup module and a second startup module.

The state acquisition module is configured to acquire an on/off state of each of the circuit breakers.

The section division module is configured to divide the auxiliary converters in the multiple unit into multiple section groups according to the on/off state of each of the circuit breakers.

The first startup module is configured to control one of the auxiliary converters in each section group to be started.

The second startup module is configured to start simultaneously remaining auxiliary converters other than the one started auxiliary converter in each section group according to a phase of a voltage outputted by the one started auxiliary converter in the section group.

The second startup module is configured to: after a ready signal is sent by each of the remaining auxiliary converters in each section group, control each of the remaining auxiliary converters to output a voltage having same three phases as the voltage outputted by the one started auxiliary converter in the section group.

Optionally, the eight carriages of each multiple unit are numbered from 1 to 8 in order. The auxiliary power supply system includes four auxiliary converters and three circuit breakers. The four auxiliary converters are respectively arranged in carriages 2, 4, 5 and 7 of each multiple unit. The three circuit breakers are configured to connect the four auxiliary converters and are respectively arranged in carriages 3, 5 and 6 of each multiple unit. The section division module is configured to:
group the auxiliary converter in the carriage 2 into one section group, and group the auxiliary converters in remaining carriages other than the carriage 2 into another section group, if only the circuit breaker in the carriage 3 is turned off;
group the auxiliary converters in the carriages 2 and 4 into one section group, and group the auxiliary converters in remaining carriages other than the carriages 2 and 4 into another section group, if only the circuit breaker in the carriage 5 is turned off;
group the auxiliary converter in the carriage 7 into one section group, and group the auxiliary converters in remaining carriages other than the carriage 7 into another section group, if only the circuit breaker in the carriage 6 is turned off;
group the auxiliary converter in the carriage 2 into a first section group, group the auxiliary converter in the carriage 4 into a second section group, and group the auxiliary converters in the carriages 5 and 7 into a third section group, if only the circuit breakers in the carriages 3 and 5 are turned off;
group the auxiliary converter in the carriage 2 into a first section group, group the auxiliary converter in the carriage 7 into a second section group, and group the auxiliary converters in the carriages 4 and 5 into a third section group, if only the circuit breakers in the carriages 3 and 6 are turned off;
group the auxiliary converter in the carriage 5 into a first section group, group the auxiliary converter in the carriage 7 into a second section group, and group the auxiliary converters in the carriages 2 and 4 into a third section group, if only the circuit breakers in the carriages 5 and 6 are turned off; and
group each of all the auxiliary converters into an independent section group, if all of the circuit breakers in the carriage 3, 5 and 6 are turned off.

Optionally, the first startup module is configured to: if a ready signal sent by only one of the auxiliary converters in the section group is received, send a startup permission signal to the auxiliary converter that sends the ready signal, where the auxiliary converter that sends the ready signal is started after receiving the startup permission signal; and if ready signals sent by two or more of the auxiliary converters in the section group are received, send a startup permission signal to an auxiliary converter having a smallest number among the auxiliary converters that send the ready signals, where the auxiliary converter having a smallest number is started after receiving the startup permission signal.

A high-speed multiple units is provided according to an embodiment of the disclosure. The high-speed multiple units includes at least one multiple unit. Each multiple unit includes eight carriages. An auxiliary power supply system includes multiple auxiliary converters arranged in different carriages of each multiple unit and multiple circuit breakers configured to connect the multiple auxiliary converters. The high-speed multiple units further includes a system for controlling an auxiliary power supply system described above.

In summary, a method and system for controlling an auxiliary power supply system of a high-speed multiple units and a high-speed multiple units are provided according to the embodiments of present disclosure. According to the method for controlling an auxiliary power supply system, firstly, an on/off state of each of the circuit breakers in each multiple unit of the high-speed multiple units is acquired; secondly, the auxiliary converters in the multiple unit are divided into multiple section groups according to the on/off state of each of the circuit breakers; finally, the auxiliary converters in each section group are started. In a process of starting the auxiliary converters in each section group, firstly, one of the auxiliary converters in each section group is controlled to be started; and secondly, remaining auxiliary converters other than the one started auxiliary converter in each section group are started simultaneously. In this way, an interphase short circuit fault that may be caused by simultaneous starting of auxiliary converters is avoided and an overall startup time of an auxiliary power supply system is shortened.

In the present specification, the embodiments are described in progressive manner. Each embodiment mainly focuses on an aspect different from other embodiments, and reference can be made to these similar parts among the embodiments.

Based on the above description of the disclosed embodiments, those skilled in the art can implement or carry out the present disclosure. It is obvious for those skilled in the art to make many modifications to these embodiments.

## Claims

1. A method for controlling an auxiliary power supply system, the method being used for an auxiliary power supply system of a high-speed multiple units train, the high-speed multiple units train
comprising at least one multiple unit, each multiple unit comprising eight carriages, the auxiliary power supply system comprising a plurality of auxiliary converters arranged in different carriages of each multiple unit and a plurality of circuit breakers configured to connect the plurality of auxiliary converters, the method for controlling the auxiliary power supply system comprising:
acquiring an on/off state of each of the circuit breakers (S101);
dividing the auxiliary converters in the multiple unit into a plurality of section groups according to the on/off state of each of the circuit breakers (S102);
controlling, by a first startup module, one of the auxiliary converters in each section group to be started (S103); and
starting simultaneously remaining auxiliary converters other than the one started auxiliary converter in each section group according to a phase of a voltage outputted by the one started auxiliary converter in the section group (S104), wherein
the starting simultaneously remaining auxiliary converters other than the one started auxiliary converter in each section group according to a phase of a voltage outputted by the one started auxiliary converter in the section group (S104) comprises:
after a ready signal is sent by each of the remaining auxiliary converters in each section group, controlling, by a second startup module, each of the remaining auxiliary converters to output a voltage having same three phases as the voltage outputted by the one started auxiliary converter in the section group (S1041).

2. The method according to claim 1, wherein the eight carriages of each multiple unit are numbered from 1 to 8 in order; the auxiliary power supply system comprises four auxiliary converters and three circuit breakers, the four auxiliary converters are respectively arranged in carriages 2, 4, 5 and 7 of each multiple unit, the three circuit breakers are configured to connect the four auxiliary converters and are respectively arranged in carriages 3, 5 and 6 of each multiple unit;
the dividing the auxiliary converters in the multiple unit into a plurality of section groups according to the on/off state of each of the circuit breakers comprises:
grouping the auxiliary converter in the carriage 2 into one section group, and grouping the auxiliary converters in remaining carriages other than the carriage 2 into another section group, if only the circuit breaker in the carriage 3 is turned off;
grouping the auxiliary converters in the carriages 2 and 4 into one section group, and grouping the auxiliary converters in remaining carriages other than the carriages 2 and 4 into another section group, if only the circuit breaker in the carriage 5 is turned off;
grouping the auxiliary converter in the carriage 7 into one section group, and grouping the auxiliary converters in remaining carriages other than the carriage 7 into another section group, if only the circuit breaker in the carriage 6 is turned off;
grouping the auxiliary converter in the carriage 2 into a first section group, grouping the auxiliary converter in the carriage 4 into a second section group, and grouping the auxiliary converters in the carriages 5 and 7 into a third section group, if only the circuit breakers in the carriages 3 and 5 are turned off;
grouping the auxiliary converter in the carriage 2 into a first section group, grouping the auxiliary converter in the carriage 7 into a second section group, and grouping the auxiliary converters in the carriages 4 and 5 into a third section group, if only the circuit breakers in the carriages 3 and 6 are turned off;
grouping the auxiliary converter in the carriage 5 into a first section group, grouping the auxiliary converter in the carriage 7 into a second section group, and grouping the auxiliary converters in the carriages 2 and 4 into a third section group, if only the circuit breakers in the carriages 5 and 6 are turned off; and
grouping each of all the auxiliary converters into an independent section group, if all of the circuit breakers in the carriage 3, 5 and 6 are turned off.

3. The method according to claim 2, wherein the controlling one of the auxiliary converters in each section group to be started comprises:
if a ready signal sent by only one of the auxiliary converters in the section group is received, sending a startup permission signal to the auxiliary converter that sends the ready signal, wherein the auxiliary converter that sends the ready signal is started after receiving the startup permission signal; and
if ready signals sent by two or more of the auxiliary converters in the section group are received, sending a startup permission signal to an auxiliary converter having a smallest number among the auxiliary converters that send the ready signals, wherein the auxiliary converter having a smallest number is started after receiving the startup permission signal.

4. A system for controlling an auxiliary power supply system, the system for controlling an auxiliary power supply system being used for an auxiliary power supply system of a high-speed multiple units train, the high-speed multiple units train comprising at least one multiple unit, each multiple unit comprising eight carriages, the auxiliary power supply system comprising a plurality of auxiliary converters arranged in different carriages of each multiple unit and a plurality of circuit breakers configured to connect the plurality of auxiliary converters, the system for controlling the auxiliary power supply system comprising:
a state acquisition module configured to acquire an on/off state of each of the circuit breakers;
a section division module configured to divide the auxiliary converters in the multiple unit into a plurality of section groups according to the on/off state of each of the circuit breakers;
a first startup module configured to control one of the auxiliary converters in each section group to be started; and
a second startup module configured to start simultaneously remaining auxiliary converters other than the one started auxiliary converter in each section group according to a phase of a voltage outputted by the one started auxiliary converter in the section group, wherein
the second startup module is configured to: after a ready signal is sent by each of the remaining auxiliary converters in each section group, control each of the remaining auxiliary converters to output a voltage having same three phases as the voltage outputted by the one started auxiliary converter in the section group.

5. The system according to claim 4, wherein the eight carriages of each multiple unit are numbered from 1 to 8 in order; the auxiliary power supply system comprises four auxiliary converters and three circuit breakers, the four auxiliary converters are respectively arranged in carriages 2, 4, 5 and 7 of each multiple unit, the three circuit breakers are configured to connect the four auxiliary converters and are respectively arranged in carriages 3, 5 and 6 of each multiple unit;
the section division module is configured to:
group the auxiliary converter in the carriage 2 into one section group, and group the auxiliary converters in remaining carriages other than the carriage 2 into another section group, if only the circuit breaker in the carriage 3 is turned off;
group the auxiliary converters in the carriages 2 and 4 into one section group, and group the auxiliary converters in remaining carriages other than the carriages 2 and 4 into another section group, if only the circuit breaker in the carriage 5 is turned off;
group the auxiliary converter in the carriage 7 into one section group, and group the auxiliary converters in remaining carriages other than the carriage 7 into another section group, if only the circuit breaker in the carriage 6 is turned off;
group the auxiliary converter in the carriage 2 into a first section group, group the auxiliary converter in the carriage 4 into a second section group, and group the auxiliary converters in the carriages 5 and 7 into a third section group, if only the circuit breakers in the carriages 3 and 5 are turned off;
group the auxiliary converter in the carriage 2 into a first section group, group the auxiliary converter in the carriage 7 into a second section group, and group the auxiliary converters in the carriages 4 and 5 into a third section group, if only the circuit breakers in the carriages 3 and 6 are turned off;
group the auxiliary converter in the carriage 5 into a first section group, group the auxiliary converter in the carriage 7 into a second section group, and group the auxiliary converters in the carriages 2 and 4 into a third section group, if only the circuit breakers in the carriages 5 and 6 are turned off; and
group each of all the auxiliary converters into an independent section group, if all of the circuit breakers in the carriage 3, 5 and 6 are turned off.

6. The system according to claim 5, wherein the first startup module is configured to:
if a ready signal sent by only one of the auxiliary converters in the section group is received, send a startup permission signal to the auxiliary converter that sends the ready signal, wherein the auxiliary converter that sends the ready signal is started after receiving the startup permission signal; and
if ready signals sent by two or more of the auxiliary converters in the section group are received, send a startup permission signal to an auxiliary converter having a smallest number among the auxiliary converters that send the ready signals, wherein the auxiliary converter having a smallest number is started after receiving the startup permission signal.

7. A high-speed multiple units train comprising:
at least one multiple unit, each multiple unit comprising eight carriages, wherein an auxiliary power supply system comprises a plurality of auxiliary converters arranged in different carriages of each multiple unit and a plurality of circuit breakers configured to connect the plurality of auxiliary converters; and
the system for controlling an auxiliary power supply system according to any one of claims 4 to 6.

## Patentansprüche

1. Verfahren zum Steuern eines Hilfsenergieversorgungssystems, wobei das Verfahren für ein Hilfsenergieversorgungssystem eines Hochgeschwindigkeits-Triebzugs verwendet wird, wobei der Hochgeschwindigkeits-Triebzug mindestens eine Triebzugeinheit umfasst, wobei jede Triebzugeinheit acht Wagen umfasst, wobei das Hilfsenergieversorgungssystem eine Vielzahl von Hilfsumrichtern, die in verschiedenen Wagen jeder Triebzugeinheit angeordnet sind, und eine Vielzahl von Leistungsschaltern, die konfiguriert sind, um die Vielzahl von Hilfsumrichtern zu verbinden, umfasst, wobei das Verfahren zum Steuern des Hilfsenergieversorgungssystems umfasst:
Erfassen eines Ein/Aus-Zustands von jedem der Leistungsschalter (S101);
Unterteilen der Hilfsumrichter in der Triebzugeinheit in eine Vielzahl von Abschnittsgruppen gemäß dem Ein/Aus-Zustand von jedem der Leistungsschalter (S102);
Steuern, durch ein erstes Startmodul, dass einer der Hilfsumrichter in jeder Abschnittsgruppe gestartet wird (S103); und
gleichzeitiges Starten verbleibender Hilfsumrichter außer dem einen gestarteten Hilfsumrichter in jeder Abschnittsgruppe gemäß einer Phase einer Spannung, die von dem einen gestarteten Hilfsumrichter in der Abschnittsgruppe ausgegeben wird (S104), wobei
das gleichzeitige Starten verbleibender Hilfsumrichter außer dem einen gestarteten Hilfsumrichter in jeder Abschnittsgruppe gemäß einer Phase einer Spannung, die von dem einen gestarteten Hilfsumrichter in der Abschnittsgruppe ausgegeben wird (S104), umfasst:
nachdem ein Bereitschaftssignal von jedem der verbleibenden Hilfsumrichter in jeder Abschnittsgruppe gesendet wird, Steuern, durch ein zweites Startmodul, jedes der verbleibenden Hilfsumrichter, eine Spannung auszugeben, die die gleichen drei Phasen wie die Spannung aufweist, die von dem einen gestarteten Hilfsumrichter in der Abschnittsgruppe ausgegeben wird (S1041).

2. Verfahren nach Anspruch 1, wobei die acht Wagen jeder Triebzugeinheit der Reihe nach von 1 bis 8 nummeriert sind; das Hilfsenergieversorgungssystem vier Hilfsumrichter und drei Leistungsschalter umfasst, die vier Hilfsumrichter jeweils in den Wagen 2, 4, 5 und 7 jeder Triebzugeinheit angeordnet sind, die drei Leistungsschalter konfiguriert sind, um die vier Hilfsumrichter zu verbinden, und jeweils in den Wagen 3, 5 und 6 jeder Triebzugeinheit angeordnet sind;
das Unterteilen der Hilfsumrichter in der Triebzugeinheit in eine Vielzahl von Abschnittsgruppen gemäß dem Ein/Aus-Zustand von jedem der Leistungsschalter umfasst:
Gruppieren des Hilfsumrichters im Wagen 2 in eine Abschnittsgruppe und Gruppieren der Hilfsumrichter in verbleibenden Wagen außer dem Wagen 2 in eine andere Abschnittsgruppe, wenn nur der Leistungsschalter im Wagen 3 ausgeschaltet ist;
Gruppieren der Hilfsumrichter in den Wagen 2 und 4 in eine Abschnittsgruppe und Gruppieren der Hilfsumrichter in verbleibenden Wagen außer den Wagen 2 und 4 in eine andere Abschnittsgruppe, wenn nur der Leistungsschalter im Wagen 5 ausgeschaltet ist;
Gruppieren des Hilfsumrichters im Wagen 7 in eine Abschnittsgruppe und Gruppieren der Hilfsumrichter in verbleibenden Wagen außer dem Wagen 7 in eine andere Abschnittsgruppe, wenn nur der Leistungsschalter im Wagen 6 ausgeschaltet ist;
Gruppieren des Hilfsumrichters im Wagen 2 in eine erste Abschnittsgruppe, Gruppieren des Hilfsumrichters im Wagen 4 in eine zweite Abschnittsgruppe und Gruppieren der Hilfsumrichter in den Wagen 5 und 7 in eine dritte Abschnittsgruppe, wenn nur die Leistungsschalter in den Wagen 3 und 5 ausgeschaltet sind;
Gruppieren des Hilfsumrichters im Wagen 2 in eine erste Abschnittsgruppe, Gruppieren des Hilfsumrichters im Wagen 7 in eine zweite Abschnittsgruppe und Gruppieren der Hilfsumrichter in den Wagen 4 und 5 in eine dritte Abschnittsgruppe, wenn nur die Leistungsschalter in den Wagen 3 und 6 ausgeschaltet sind;
Gruppieren des Hilfsumrichters im Wagen 5 in eine erste Abschnittsgruppe, Gruppieren des Hilfsumrichters im Wagen 7 in eine zweite Abschnittsgruppe und Gruppieren der Hilfsumrichter in den Wagen 2 und 4 in eine dritte Abschnittsgruppe, wenn nur die Leistungsschalter in den Wagen 5 und 6 ausgeschaltet sind; und
Gruppieren jedes aller Hilfsumrichter in eine unabhängige Abschnittsgruppe, wenn alle Leistungsschalter in den Wagen 3, 5 und 6 ausgeschaltet sind.

3. Verfahren nach Anspruch 2, wobei das Steuern, dass einer der Hilfsumrichter in jeder Abschnittsgruppe gestartet wird, umfasst:
wenn ein Bereitschaftssignal, das von nur einem der Hilfsumrichter in der Abschnittsgruppe gesendet wird, empfangen wird, Senden eines Starterlaubnissignals an den Hilfsumrichter, der das Bereitschaftssignal sendet, wobei der Hilfsumrichter, der das Bereitschaftssignal sendet, nach dem Empfangen des Starterlaubnissignals gestartet wird; und
wenn Bereitschaftssignale, die von zwei oder mehr der Hilfsumrichter in der Abschnittsgruppe gesendet werden, empfangen werden, Senden eines Starterlaubnissignals an einen Hilfsumrichter mit einer kleinsten Nummer unter den Hilfsumrichtern, die die Bereitschaftssignale senden, wobei der Hilfsumrichter mit einer kleinsten Nummer nach dem Empfangen des Starterlaubnissignals gestartet wird.

4. System zum Steuern eines Hilfsenergieversorgungssystems, wobei das System zum Steuern eines Hilfsenergieversorgungssystems für ein Hilfsenergieversorgungssystem eines Hochgeschwindigkeits-Triebzugs verwendet wird, wobei der Hochgeschwindigkeits-Triebzug mindestens eine Triebzugeinheit umfasst, wobei jede Triebzugeinheit acht Wagen umfasst, wobei das Hilfsenergieversorgungssystem eine Vielzahl von Hilfsumrichtern, die in verschiedenen Wagen jeder Triebzugeinheit angeordnet sind, und eine Vielzahl von Leistungsschaltern, die konfiguriert sind, um die Vielzahl von Hilfsumrichtern zu verbinden, umfasst, wobei das System zum Steuern des Hilfsenergieversorgungssystems umfasst:
ein Zustandserfassungsmodul, das konfiguriert ist, um einen Ein/Aus-Zustand von jedem der Leistungsschalter zu erfassen;
ein Abschnittsunterteilungsmodul, das konfiguriert ist, um die Hilfsumrichter in der Triebzugeinheit in eine Vielzahl von Abschnittsgruppen gemäß dem Ein/Aus-Zustand von jedem der Leistungsschalter zu unterteilen;
ein erstes Startmodul, das konfiguriert ist, um zu steuern, dass einer der Hilfsumrichter in jeder Abschnittsgruppe gestartet wird; und
ein zweites Startmodul, das konfiguriert ist, um verbleibende Hilfsumrichter außer dem einen gestarteten Hilfsumrichter in jeder Abschnittsgruppe gemäß einer Phase einer Spannung, die von dem einen gestarteten Hilfsumrichter in der Abschnittsgruppe ausgegeben wird, gleichzeitig zu starten, wobei
das zweite Startmodul konfiguriert ist, um: nachdem ein Bereitschaftssignal von jedem der verbleibenden Hilfsumrichter in jeder Abschnittsgruppe gesendet wird, jeden der verbleibenden Hilfsumrichter zu steuern, eine Spannung auszugeben, die die gleichen drei Phasen wie die Spannung aufweist, die von dem einen gestarteten Hilfsumrichter in der Abschnittsgruppe ausgegeben wird.

5. System nach Anspruch 4, wobei die acht Wagen jeder Triebzugeinheit der Reihe nach von 1 bis 8 nummeriert sind; das Hilfsenergieversorgungssystem vier Hilfsumrichter und drei Leistungsschalter umfasst, die vier Hilfsumrichter jeweils in den Wagen 2, 4, 5 und 7 jeder Triebzugeinheit angeordnet sind, die drei Leistungsschalter konfiguriert sind, um die vier Hilfsumrichter zu verbinden, und jeweils in den Wagen 3, 5 und 6 jeder Triebzugeinheit angeordnet sind;
das Abschnittsunterteilungsmodul konfiguriert ist, um:
den Hilfsumrichter im Wagen 2 in eine Abschnittsgruppe zu gruppieren und die Hilfsumrichter in verbleibenden Wagen außer dem Wagen 2 in eine andere Abschnittsgruppe zu gruppieren, wenn nur der Leistungsschalter im Wagen 3 ausgeschaltet ist;
die Hilfsumrichter in den Wagen 2 und 4 in eine Abschnittsgruppe zu gruppieren und die Hilfsumrichter in verbleibenden Wagen außer den Wagen 2 und 4 in eine andere Abschnittsgruppe zu gruppieren, wenn nur der Leistungsschalter im Wagen 5 ausgeschaltet ist;
den Hilfsumrichter im Wagen 7 in eine Abschnittsgruppe zu gruppieren und die Hilfsumrichter in verbleibenden Wagen außer dem Wagen 7 in eine andere Abschnittsgruppe zu gruppieren, wenn nur der Leistungsschalter im Wagen 6 ausgeschaltet ist;
den Hilfsumrichter im Wagen 2 in eine erste Abschnittsgruppe zu gruppieren, den Hilfsumrichter im Wagen 4 in eine zweite Abschnittsgruppe zu gruppieren und die Hilfsumrichter in den Wagen 5 und 7 in eine dritte Abschnittsgruppe zu gruppieren, wenn nur die Leistungsschalter in den Wagen 3 und 5 ausgeschaltet sind;
den Hilfsumrichter im Wagen 2 in eine erste Abschnittsgruppe zu gruppieren, den Hilfsumrichter im Wagen 7 in eine zweite Abschnittsgruppe zu gruppieren und die Hilfsumrichter in den Wagen 4 und 5 in eine dritte Abschnittsgruppe zu gruppieren, wenn nur die Leistungsschalter in den Wagen 3 und 6 ausgeschaltet sind;
den Hilfsumrichter im Wagen 5 in eine erste Abschnittsgruppe zu gruppieren, den Hilfsumrichter im Wagen 7 in eine zweite Abschnittsgruppe zu gruppieren und die Hilfsumrichter in den Wagen 2 und 4 in eine dritte Abschnittsgruppe zu gruppieren, wenn nur die Leistungsschalter in den Wagen 5 und 6 ausgeschaltet sind; und
jeden aller Hilfsumrichter in eine unabhängige Abschnittsgruppe zu gruppieren, wenn alle Leistungsschalter in den Wagen 3, 5 und 6 ausgeschaltet sind.

6. System nach Anspruch 5, wobei das erste Startmodul konfiguriert ist, um:
wenn ein Bereitschaftssignal, das von nur einem der Hilfsumrichter in der Abschnittsgruppe gesendet wird, empfangen wird, ein Starterlaubnissignal an den Hilfsumrichter zu senden, der das Bereitschaftssignal sendet, wobei der Hilfsumrichter, der das Bereitschaftssignal sendet, nach dem Empfangen des Starterlaubnissignals gestartet wird; und
wenn Bereitschaftssignale, die von zwei oder mehr der Hilfsumrichtern in der Abschnittsgruppe gesendet werden, empfangen werden, ein Starterlaubnissignal an einen Hilfsumrichter mit einer kleinsten Nummer unter den Hilfsumrichtern zu senden, die die Bereitschaftssignale senden, wobei der Hilfsumrichter mit einer kleinsten Nummer nach dem Empfangen des Starterlaubnissignals gestartet wird.

7. Hochgeschwindigkeits-Triebzug, umfassend:
mindestens eine Triebzugeinheit, wobei jede Triebzugeinheit acht Wagen umfasst, wobei ein Hilfsenergieversorgungssystem eine Vielzahl von Hilfsumrichtern, die in verschiedenen Wagen jeder Triebzugeinheit angeordnet sind, und eine Vielzahl von Leistungsschaltern, die konfiguriert sind, um die Vielzahl von Hilfsumrichtern zu verbinden, umfasst; und
das System zum Steuern eines Hilfsenergieversorgungssystems nach einem der Ansprüche 4 bis 6.

## Revendications

1. Procédé de commande d'un système d'alimentation auxiliaire, le procédé étant utilisé pour un système d'alimentation auxiliaire d'un train à unités multiples à grande vitesse, le train à unités multiples à grande vitesse comprenant au moins une unité multiple, chaque unité multiple comprenant huit voitures, le système d'alimentation auxiliaire comprenant une pluralité de convertisseurs auxiliaires agencés dans différentes voitures de chaque unité multiple et une pluralité de disjoncteurs configurés pour connecter la pluralité de convertisseurs auxiliaires, le procédé de commande du système d'alimentation auxiliaire comprenant :
l'acquisition d'un état ouvert/fermé de chacun des disjoncteurs (S101) ;
la division des convertisseurs auxiliaires dans l'unité multiple en une pluralité de groupes de section selon l'état ouvert/fermé de chacun des disjoncteurs (S102) ;
la commande, par un premier module de démarrage, qu'un des convertisseurs auxiliaires dans chaque groupe de section soit démarré (S103) ; et
le démarrage simultané des convertisseurs auxiliaires restants autres que le convertisseur auxiliaire démarré dans chaque groupe de section selon une phase d'une tension délivrée par le convertisseur auxiliaire démarré dans le groupe de section (S104), dans lequel
le démarrage simultané des convertisseurs auxiliaires restants autres que le convertisseur auxiliaire démarré dans chaque groupe de section selon une phase d'une tension délivrée par le convertisseur auxiliaire démarré dans le groupe de section (S104) comprend :
après qu'un signal de disponibilité est envoyé par chacun des convertisseurs auxiliaires restants dans chaque groupe de section, la commande, par un second module de démarrage, de chacun des convertisseurs auxiliaires restants pour délivrer une tension ayant les mêmes trois phases que la tension délivrée par le convertisseur auxiliaire démarré dans le groupe de section (S1041).

2. Procédé selon la revendication 1, dans lequel les huit voitures de chaque unité multiple sont numérotées de 1 à 8 dans l'ordre ; le système d'alimentation auxiliaire comprend quatre convertisseurs auxiliaires et trois disjoncteurs, les quatre convertisseurs auxiliaires sont respectivement agencés dans les voitures 2, 4, 5 et 7 de chaque unité multiple, les trois disjoncteurs sont configurés pour connecter les quatre convertisseurs auxiliaires et sont respectivement agencés dans les voitures 3, 5 et 6 de chaque unité multiple ;
la division des convertisseurs auxiliaires dans l'unité multiple en une pluralité de groupes de section selon l'état ouvert/fermé de chacun des disjoncteurs comprend :
le groupement du convertisseur auxiliaire dans la voiture 2 dans un groupe de section, et le groupement des convertisseurs auxiliaires dans les voitures restantes autres que la voiture 2 dans un autre groupe de section, si seul le disjoncteur dans la voiture 3 est ouvert ;
le groupement des convertisseurs auxiliaires dans les voitures 2 et 4 dans un groupe de section, et le groupement des convertisseurs auxiliaires dans les voitures restantes autres que les voitures 2 et 4 dans un autre groupe de section, si seul le disjoncteur dans la voiture 5 est ouvert ;
le groupement du convertisseur auxiliaire dans la voiture 7 dans un groupe de section, et le groupement des convertisseurs auxiliaires dans les voitures restantes autres que la voiture 7 dans un autre groupe de section, si seul le disjoncteur dans la voiture 6 est ouvert ;
le groupement du convertisseur auxiliaire dans la voiture 2 dans un premier groupe de section, le groupement du convertisseur auxiliaire dans la voiture 4 dans un deuxième groupe de section, et le groupement des convertisseurs auxiliaires dans les voitures 5 et 7 dans un troisième groupe de section, si seuls les disjoncteurs dans les voitures 3 et 5 sont ouverts ;
le groupement du convertisseur auxiliaire dans la voiture 2 dans un premier groupe de section, le groupement du convertisseur auxiliaire dans la voiture 7 dans un deuxième groupe de section, et le groupement des convertisseurs auxiliaires dans les voitures 4 et 5 dans un troisième groupe de section, si seuls les disjoncteurs dans les voitures 3 et 6 sont ouverts ;
le groupement du convertisseur auxiliaire dans la voiture 5 dans un premier groupe de section, le groupement du convertisseur auxiliaire dans la voiture 7 dans un deuxième groupe de section, et le groupement des convertisseurs auxiliaires dans les voitures 2 et 4 dans un troisième groupe de section, si seuls les disjoncteurs dans les voitures 5 et 6 sont ouverts ; et
le groupement de chacun de tous les convertisseurs auxiliaires dans un groupe de section indépendant, si tous les disjoncteurs dans les voitures 3, 5 et 6 sont ouverts.

3. Procédé selon la revendication 2, dans lequel la commande qu'un des convertisseurs auxiliaires dans chaque groupe de section soit démarré comprend :
si un signal de disponibilité envoyé par un seul des convertisseurs auxiliaires dans le groupe de section est reçu, l'envoi d'un signal d'autorisation de démarrage au convertisseur auxiliaire qui envoie le signal de disponibilité, dans lequel le convertisseur auxiliaire qui envoie le signal de disponibilité est démarré après réception du signal d'autorisation de démarrage ; et
si des signaux de disponibilité envoyés par deux ou plus des convertisseurs auxiliaires dans le groupe de section sont reçus, l'envoi d'un signal d'autorisation de démarrage à un convertisseur auxiliaire ayant le plus petit numéro parmi les convertisseurs auxiliaires qui envoient les signaux de disponibilité, dans lequel le convertisseur auxiliaire ayant le plus petit numéro est démarré après réception du signal d'autorisation de démarrage.

4. Système de commande d'un système d'alimentation auxiliaire, le système de commande d'un système d'alimentation auxiliaire étant utilisé pour un système d'alimentation auxiliaire d'un train à unités multiples à grande vitesse, le train à unités multiples à grande vitesse comprenant au moins une unité multiple, chaque unité multiple comprenant huit voitures, le système d'alimentation auxiliaire comprenant une pluralité de convertisseurs auxiliaires agencés dans différentes voitures de chaque unité multiple et une pluralité de disjoncteurs configurés pour connecter la pluralité de convertisseurs auxiliaires, le système de commande du système d'alimentation auxiliaire comprenant :
un module d'acquisition d'état configuré pour acquérir un état ouvert/fermé de chacun des disjoncteurs ;
un module de division de section configuré pour diviser les convertisseurs auxiliaires dans l'unité multiple en une pluralité de groupes de section selon l'état ouvert/fermé de chacun des disjoncteurs ;
un premier module de démarrage configuré pour commander qu'un des convertisseurs auxiliaires dans chaque groupe de section soit démarré ; et
un second module de démarrage configuré pour démarrer simultanément les convertisseurs auxiliaires restants autres que le convertisseur auxiliaire démarré dans chaque groupe de section selon une phase d'une tension délivrée par le convertisseur auxiliaire démarré dans le groupe de section, dans lequel
le second module de démarrage est configuré pour : après qu'un signal de disponibilité est envoyé par chacun des convertisseurs auxiliaires restants dans chaque groupe de section, commander chacun des convertisseurs auxiliaires restants pour délivrer une tension ayant les mêmes trois phases que la tension délivrée par le convertisseur auxiliaire démarré dans le groupe de section.

5. Système selon la revendication 4, dans lequel les huit voitures de chaque unité multiple sont numérotées de 1 à 8 dans l'ordre ; le système d'alimentation auxiliaire comprend quatre convertisseurs auxiliaires et trois disjoncteurs, les quatre convertisseurs auxiliaires sont respectivement agencés dans les voitures 2, 4, 5 et 7 de chaque unité multiple, les trois disjoncteurs sont configurés pour connecter les quatre convertisseurs auxiliaires et sont respectivement agencés dans les voitures 3, 5 et 6 de chaque unité multiple ;
le module de division de section est configuré pour :
grouper le convertisseur auxiliaire dans la voiture 2 dans un groupe de section, et grouper les convertisseurs auxiliaires dans les voitures restantes autres que la voiture 2 dans un autre groupe de section, si seul le disjoncteur dans la voiture 3 est ouvert ;
grouper les convertisseurs auxiliaires dans les voitures 2 et 4 dans un groupe de section, et grouper les convertisseurs auxiliaires dans les voitures restantes autres que les voitures 2 et 4 dans un autre groupe de section, si seul le disjoncteur dans la voiture 5 est ouvert ;
grouper le convertisseur auxiliaire dans la voiture 7 dans un groupe de section, et grouper les convertisseurs auxiliaires dans les voitures restantes autres que la voiture 7 dans un autre groupe de section, si seul le disjoncteur dans la voiture 6 est ouvert ;
grouper le convertisseur auxiliaire dans la voiture 2 dans un premier groupe de section, grouper le convertisseur auxiliaire dans la voiture 4 dans un deuxième groupe de section, et grouper les convertisseurs auxiliaires dans les voitures 5 et 7 dans un troisième groupe de section, si seuls les disjoncteurs dans les voitures 3 et 5 sont ouverts ;
grouper le convertisseur auxiliaire dans la voiture 2 dans un premier groupe de section, grouper le convertisseur auxiliaire dans la voiture 7 dans un deuxième groupe de section, et grouper les convertisseurs auxiliaires dans les voitures 4 et 5 dans un troisième groupe de section, si seuls les disjoncteurs dans les voitures 3 et 6 sont ouverts ;
grouper le convertisseur auxiliaire dans la voiture 5 dans un premier groupe de section, grouper le convertisseur auxiliaire dans la voiture 7 dans un deuxième groupe de section, et grouper les convertisseurs auxiliaires dans les voitures 2 et 4 dans un troisième groupe de section, si seuls les disjoncteurs dans les voitures 5 et 6 sont ouverts ; et
grouper chacun de tous les convertisseurs auxiliaires dans un groupe de section indépendant, si tous les disjoncteurs dans les voitures 3, 5 et 6 sont ouverts.

6. Système selon la revendication 5, dans lequel le premier module de démarrage est configuré pour :
si un signal de disponibilité envoyé par un seul des convertisseurs auxiliaires dans le groupe de section est reçu, envoyer un signal d'autorisation de démarrage au convertisseur auxiliaire qui envoie le signal de disponibilité, dans lequel le convertisseur auxiliaire qui envoie le signal de disponibilité est démarré après réception du signal d'autorisation de démarrage ; et
si des signaux de disponibilité envoyés par deux ou plus des convertisseurs auxiliaires dans le groupe de section sont reçus, envoyer un signal d'autorisation de démarrage à un convertisseur auxiliaire ayant le plus petit numéro parmi les convertisseurs auxiliaires qui envoient les signaux de disponibilité, dans lequel le convertisseur auxiliaire ayant le plus petit numéro est démarré après réception du signal d'autorisation de démarrage.

7. Train à unités multiples à grande vitesse comprenant :
au moins une unité multiple, chaque unité multiple comprenant huit voitures, dans lequel un système d'alimentation auxiliaire comprend une pluralité de convertisseurs auxiliaires agencés dans différentes voitures de chaque unité multiple et une pluralité de disjoncteurs configurés pour connecter la pluralité de convertisseurs auxiliaires ; et
le système de commande d'un système d'alimentation auxiliaire selon l'une quelconque des revendications 4 à 6.
